# EUROPEAN PATENT APPLICATION

(11) **EP 4 521 060 A1**
(43) Date of publication of application: **12.03.2025**
(21) Application number: 22940716.8
(22) Date of filing: 16.08.2022
(51) Int. Cl.: G01B 21/32, H01M 10/42

(54) **STRAIN DETECTION ASSEMBLY, BATTERY, AND ELECTRIC DEVICE**

(30) Priority: 05.05.2022 CN 202221055106 U
(71) Applicant: Contemporary Amperex Technology (Hong Kong) Limited, Hong Kong (HK)
(72) Inventor: HAN, Fengsheng, Ningde, Fujian 352100 (CN)
(74) Representative: Ran, Handong
(86) International application number: PCT/CN2022/112848
(87) International publication number: WO 2023/213022

(57) **Abstract**

A strain detection assembly (30), a battery (100), and an electric device, relating to the field of batteries. The strain detection assembly (30) comprises: a flexible member (31) and a strain detection element (33). The strain detection element (33) is provided on the flexible member (31); the strain detection element (33) is used for detecting and obtaining a strain parameter of the flexible member (31). The flexible member (31) is attached to an end face of a battery cell (20), so that the flexible member (31) deforms synchronously with the expansion of the end face of the battery cell (20), and the strain detection element (33) is used to detect a strain parameter of the flexible member (31), thereby accurately obtaining an expansion parameter of the end face of the battery cell (20), and preventing direct contact between the strain detection element (33) and the battery cell (20). The service life is prolonged, the stability is improved, and accurate acquisition of expansion data in a use process of a battery cell (20) in a long term is facilitated.

## Description

### CROSS-REFERENCE TO RELATED APPLICATIONS

This application claims priority to Chinese Patent Application No. 2022210551068, filed on May 5, 2022 and entitled "STRAIN DETECTION ASSEMBLY, BATTERY, AND ELECTRIC DEVICE", which is incorporated herein by reference in its entirety.

### TECHNICAL FIELD

This application relates to the battery field, and specifically, relates to a strain detection assembly, a battery, and an electric device.

### BACKGROUND

Typically, during the use of lithium batteries, changes in the thicknesses of battery electrode plates and gas generation inside battery cells cause varying degrees of swelling deformation of end surfaces of battery cells. Therefore, strain gauges are usually directly set on end surfaces of battery cells to obtain swelling data of battery cells during use.

In actual use, it is found that under the above disposition conditions, it is impossible to accurately obtain swelling data of battery cells during use over a long period, causing safety hazards.

### SUMMARY

This application provides a strain detection assembly, a battery, and an electric device that can address the technical problem of being unable to accurately obtain swelling data of battery cells during use over a long period.

According to a first aspect, this application provides a strain detection assembly including a flexible part and a strain detection element, where the strain detection element is disposed at the flexible part, and the strain detection element is configured to detect and obtain a strain parameter of the flexible part.

In the technical solution of some embodiments of this application, the strain detection element is disposed on the flexible part so that during actual use, the flexible part can be attached to the end surface of the battery cell, allowing the flexible part to deform synchronously with the swelling of the battery cell. Deformation of the flexible part transfers strain and stress to the strain detection element, allowing the strain detection element to detect the strain parameter of the flexible part, thereby accurately obtaining the swelling parameter of the end surface of the battery cell. The above disposition can avoid direct contact between the strain detection element and the battery cell, prevent the strain detection element from failing due to heat, and extend the service life and stability of the strain detection element, helping to accurately obtain swelling data of the battery cell during use over a long period.

In some embodiments, the flexible part has an adhering layer and a flexible body that are arranged in a stacking manner, and the strain detection element is disposed at the flexible body. Disposition of the adhering layer facilitates stable connection of the flexible part to the end surface of the battery cell, preventing the flexible part from falling off the battery cell during use, while such falling off makes it unable to accurately obtain swelling data of the battery cell during use.

In some embodiments, at least a portion of the strain detection element is embedded in the flexible body. The above disposition can stably fix the strain detection element to the flexible body, preventing separation of the two. As compared with placing the strain detection element on the surface of the flexible body, the manner of embedding at least a portion of the strain detection element provides higher deformation detection accuracy and is more conducive to accurately obtaining swelling data of the battery cell during use.

In some embodiments, the strain detection element is wrapped in the flexible body. Under the above disposition conditions, the strain detection element can be stably fixed to the flexible body, and using the flexible body to protect the strain detection element prevents damage to the strain detection element, thereby further improving the service life thereof.

In some embodiments, the flexible body is capable of controllably generating heat. The flexible body can be controlled by electricity, temperature, and the like, or even it can be configured to generate heat under a predetermined squeezing force, allowing the flexible body to generate heat depending on actual needs. In this case, the flexible body integrates the heating function and the strain detection function together, offering a simple structure, thereby effectively improving space utilization. In this case, if the strain detection assembly is attached to the battery cell, the swelling change of the battery cell can be obtained, the battery cell can be heated as needed, and based on the data changes detected by the strain detection element, whether the strain detection assembly falls off the battery cell and whether there is dry burning can be determined, thereby avoiding safety accidents.

In some embodiments, the flexible body is capable of electrothermally generating heat. Electrothermally generating heat has high controllability and is easy to operate.

In some embodiments, the flexible body includes a first insulating protective layer, an electrothermally generating layer, and a second insulating protective layer that are sequentially stacked, and the first insulating protective layer is connected to the adhering layer. The insulation of the first insulating protective layer and second insulating protective layer reduces the safety issues caused by the electrothermally generating layer being directly exposed. In addition, the first insulating protective layer and second insulating protective layer effectively protect the electrothermally generating layer, preventing the electrothermally generating layer from being damaged.

In some embodiments, multiple strain detection elements are provided, the multiple strain detection elements include a first strain detection element and a second strain detection element, and strain detection directions of the first strain detection element and the second strain detection element are consistent. With the multiple strain detection elements provided in different regions, and the strain detection directions of the first strain detection element and second strain detection element being consistent, data obtained by the strain detection elements disposed at different positions can be compared. For example, data obtained by the first strain detection element and the second strain detection element can be compared to obtain actual swelling data for all regions, helping to determine, through comparative analysis, whether the flexible part falls off the end surface of the battery cell.

According to a second aspect, this application provides a battery including multiple battery cells and the strain detection assembly provided in the above embodiments, where the flexible part is adhesively connected to the end surface of at least one battery cell. The flexible part being attached to the end surface of at least one battery cell allows the flexible part to deform synchronously with the swelling of the end surface of the battery cell attached. The strain parameter of the flexible part is detected by the strain detection element, thereby accurately obtaining a swelling parameter of the end surface of the battery cell. In addition, the flexible part can avoid direct contact between the strain detection element and the battery cell, and avoid failure of the strain detection element caused by heat, extending the service life and stability of the strain detection element, thereby helping to accurately obtain swelling data of the battery cell during use over a long period.

In some embodiments, strain detection assemblies correspond one-to-one to the battery cells, and the flexible part of each strain detection assembly is attached to an end surface of the corresponding battery cell. That is, one strain detection assembly detects a swelling change of the end surface of only one battery cell.

In some embodiments, the flexible part of the strain detection assembly is attached to end surfaces of multiple battery cells. That is, one strain detection assembly can simultaneously detect the swelling changes of the end surfaces of multiple battery cells.

According to a third aspect, this application provides an electric device, which includes the battery in the above embodiments, where the battery is used for power supply.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same parts. In the accompanying drawings:
FIG. 1 is a schematic structural diagram of a vehicle according to some embodiments of this application;
FIG. 2 is a schematic exploded view of a structure of a battery according to some embodiments of this application;
FIG. 3 is a schematic exploded view of a structure of a battery cell according to some embodiments of this application;
FIG. 4 is a schematic cross-sectional structural diagram of a strain detection assembly according to some embodiments of this application;
FIG. 5 is a schematic cross-sectional structural diagram of a strain detection assembly according to some embodiments of this application;
FIG. 6 is a schematic cross-sectional structural diagram of a strain detection assembly according to some embodiments of this application;
FIG. 7 is a schematic exploded view of a structure of a battery cell according to some embodiments of this application;
FIG. 8 is a schematic cross-sectional structural diagram of a strain detection assembly according to some embodiments of this application;
FIG. 9 is a schematic exploded view of a structure of a strain detection assembly and a battery cell according to some embodiments of this application; and
FIG. 10 is a schematic assembly diagram of a strain detection assembly and a battery cell according to some embodiments of this application.

Reference signs in specific embodiments are as follows:
1000. vehicle;
100. battery; 200. controller; 300. motor;
10. box; 11. first portion; 12. second portion;
20. battery cell; 21. end cover; 21a. electrode terminal; 22. housing; 23. electrode assembly; 23a. tab;
30. strain detection assembly; 31. flexible part; 33. strain detection element; 311. adhering layer; 312. flexible body; 314. first insulating protective layer; 315. electrothermally generating layer; 316. second insulating protective layer; 320. mounting region; 321. central region; 323. edge region; and 330. swelling groove.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "multiple" means at least two unless otherwise specifically stated.

Reference to "embodiment" in the specification means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in some embodiments of this application as appropriate to specific situations.

Currently, from a perspective of the market development, traction batteries are more extensively applied. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The inventors have noted that typically, during the use of lithium batteries, changes in the thicknesses of battery electrode plates provided and gas generation inside battery cells cause varying degrees of swelling deformation of end surfaces of battery cells. Therefore, strain gauges are usually directly set on end surfaces of battery cells to obtain swelling data of battery cells during use. In actual use, it is found that under the above disposition conditions, it is impossible to accurately obtain swelling data of battery cells during use over a long period, causing safety hazards.

To accurately obtain swelling data of battery cells during use over a long period and improve service life of strain gauges, the inventors have found that the main reason for the inability to accurately obtain swelling data of battery cells during use over a long period is that heat generated by battery cells directly acts on strain gauges, causing strain gauges to fail and affecting service life and detection accuracy of strain gauges.

Based on the above research, to solve the problem of being unable to accurately obtain swelling data of battery cells during use over a long period, the inventors have designed a strain detection assembly. Disposing a strain detection element on a flexible part and attaching the flexible part to a battery cell allow the flexible part to deform synchronously with swelling of the battery cell. The flexible part prevents direct contact between a strain gauge and the battery cell, thereby avoiding heat generated by the battery cell during use from directly acting on the strain detection element. This also reduces the requirements for the strain detection element to a certain extent, expanding the selection range of the strain detection element.

The battery cell disclosed in the embodiments of this application may be used without limitation in an electric apparatus such as a vehicle, a ship, or an aircraft. A power system of the electric apparatus can include the battery cell and battery disclosed in this application. This helps mitigate and automatically adjust the swelling force of the battery cell to avoid degradation, replenish the electrolyte consumed, and improve the stability of battery performance and battery life.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

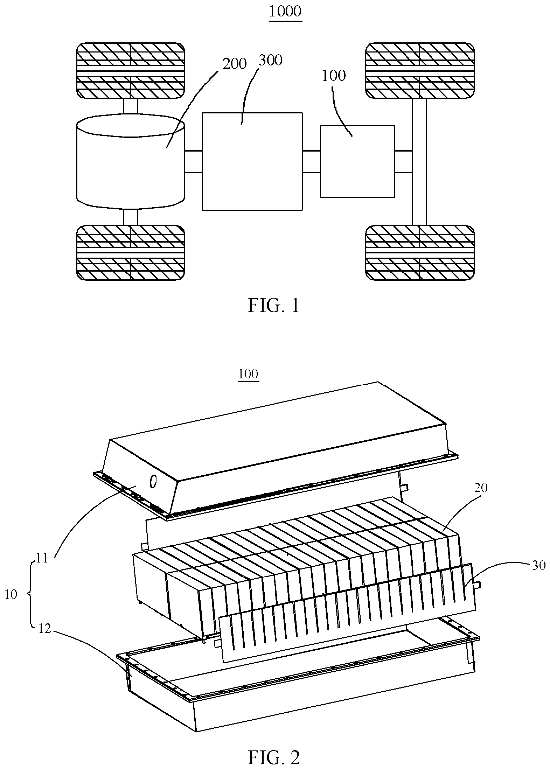

Referring to FIG. 1, FIG. 1 is a schematic structural diagram of the vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy a working electricity need during start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 includes a box 10, a battery cell 20, and a strain detection assembly 30.

The battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 so that the first portion 11 and the second portion 12 jointly define the accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, multiple battery cells 20 are provided, and the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety of the multiple battery cells 20 is accommodated in the box 10; or certainly, the battery 100 may be formed by multiple battery cells 20 being connected in series, parallel, or series-parallel first to form a battery module and then multiple battery modules being connected in series, parallel, or series-parallel to form an entirety which is accommodated in the box 10. The battery 100 may further include other structures. For example, the battery 100 may further include a busbar configured to implement electrical connection between the multiple battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

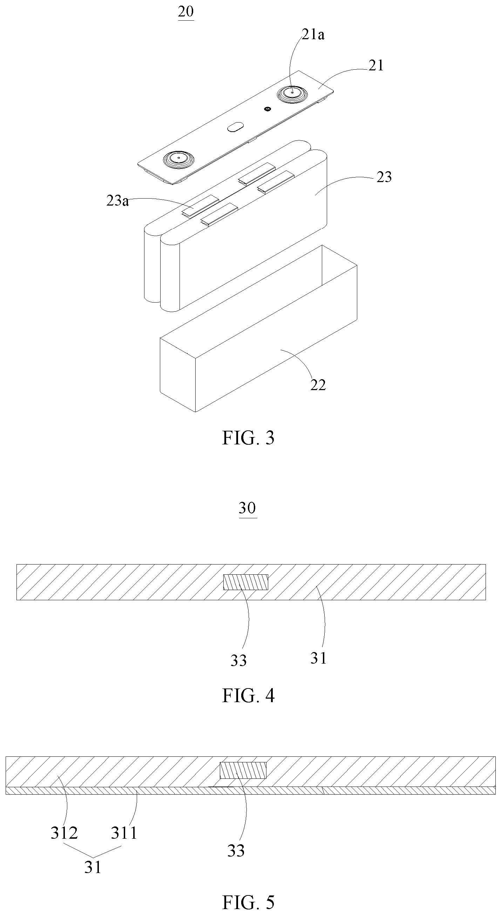

Referring to FIG. 3, FIG. 3 is a schematic exploded view of a structure of a battery cell 20 according to some embodiments of this application. The battery cell 20 refers to a smallest element constituting the battery 100. As shown in FIG. 3, the battery cell 20 includes an end cover 21, a housing 22, an electrode assembly 23, and other functional components.

The end cover 21 refers to a component that covers an opening of the housing 22 to isolate an internal environment of the battery cell 20 from an external environment. Without limitation, a shape of the end cover 21 and may be adapted to a shape of the housing 22 to fit the housing 22. Optionally, the end cover 21 may be made of a material with certain stiffness and strength (for example, aluminum alloy), so that the end cover 21 is less likely to deform when subjected to squeezing and collision, allowing the battery cell 20 to have higher structural strength and enhanced safety performance. The end cover 21 may be provided with functional components such as an electrode terminal 21a. The electrode terminal 21a may be configured to be electrically connected to the electrode assembly 23 for outputting or inputting electrical energy of the battery cell 20. In some embodiments, the end cover 21 may further be provided with a pressure relief mechanism for releasing internal pressure when the internal pressure or a temperature of the battery cell 20 reaches a threshold. The end cover 21 may also be made of various materials such as copper, iron, aluminum, stainless steel, aluminum alloy, and plastic. This is not particularly limited in the embodiments of this application. In some embodiments, an insulator may also be provided at an inner side of the end cover 21. The insulator may be configured to isolate an electrically connected component in the housing 22 from the end cover 21 to reduce the risk of short circuits. For example, the insulator may be made of plastic, rubber, or the like.

The housing 22 is an assembly configured to form an internal environment of the battery cell 20 together with the end cover 21, where the formed internal environment may be used for accommodating the electrode assembly 23, an electrolyte, and other components. The housing 22 and the end cover 21 may be separate components, an opening may be provided on the housing 22, and the end cover 21 covers the opening to form the internal environment of the battery cell 20. Without limitation, the end cover 21 and the housing 22 may also be integrated. Specifically, the end cover 21 and the housing 22 may form a shared connection surface before other components are disposed inside the housing, and then the end cover 21 covers the housing 22 when inside of the housing 22 needs to be enclosed. The housing 22 may be of various shapes and sizes, such as a cuboid shape, a cylindrical shape, and a hexagonal prism shape, and optionally, a cuboid shape. Specifically, a shape of the housing 22 may be determined according to a specific shape and size of the electrode assembly 23. The housing 22 may be made of various materials such as copper, iron, aluminum, stainless steel, aluminum alloy, and plastic. This is not particularly limited in the embodiments of this application.

The electrode assembly 23 is a component in which electrochemical reactions occur in the battery cell 20. The housing 22 may include one or more electrode assemblies 23. The electrode assembly 23 is mainly formed by winding or stacking a positive electrode plate and a negative electrode plate, and a separator is generally provided between the positive electrode plate and the negative electrode plate. Parts of the positive electrode plate and the negative electrode plate that have active substances constitute a body portion of the electrode assembly 23, while parts of the positive electrode plate and the negative electrode plate that have no active substances separately constitute tabs 23a respectively. A positive tab 23a and a negative tab 23a may both be located at one end of the body portion or be located at two ends of the body portion respectively. During charge and discharge of the battery 100, a positive electrode active substance and a negative electrode active substance react with an electrolyte, and the tabs 23a are connected to the electrode terminals 21a to form a current loop.

Referring to FIG. 2, the strain detection assembly 30 is accommodated in the box 10, and the strain detection assembly 30 is configured to be attached to an end surface of at least one battery cell 20 to detect and obtain swelling data of the end surface of the attached battery cell 20 during use.

The end surface of the battery cell 20 refers to a side wall of the housing 22 of the battery cell 20 that is used to mate with the strain detection assembly 30.

Referring to FIG. 4, FIG. 4 is a schematic cross-sectional structural diagram of a strain detection assembly 30 according to some embodiments of this application. According to some embodiments of this application, this application provides a strain detection assembly 30 including a flexible part 31 and a strain detection element 33, where the strain detection element 33 is disposed at the flexible part 31, and the strain detection element 33 is configured to detect and obtain a strain parameter of the flexible part 31.

The flexible part 31 can deform under stress and restore to its before-deformation state after the stress disappears. When attached to the end surface of the battery cell 20, the flexible part 31 can synchronously produce strain with the swelling of the end surface, and the deformation of the flexible part 31 transfers strain and stress to the strain detection element 33.

The strain detection element 33 is an element used to detect strain.

In the technical solution of some embodiments of this application, the strain detection element 33 is disposed on the flexible part 31 so that during actual use, for example, the flexible part 31 can be attached to the end surface of the battery cell 20, allowing the flexible part 31 to deform synchronously with the swelling of the end surface of the battery cell 20. In addition, deformation of the flexible part 31 transfers strain and stress to the strain detection element 33, allowing the strain detection element 33 to detect the strain parameter of the flexible part 31, thereby accurately obtaining the swelling parameter of the end surface of the battery cell 20. Furthermore, the battery cell 20 discharges heat during use. Therefore, the above disposition can avoid direct contact between the strain detection element 33 and the battery cell 20, prevent the strain detection element 33 from failing due to heat, and extend the service life and stability of the strain detection element, helping to accurately obtain swelling data of the battery cell 20 during use over a long period.

The flexible part 31 can be a film-like part, a block-like part, or the like. For example, the flexible part 31 can be a film-like part in shapes such as triangle, rectangle, and pentagon. To avoid material waste, the flexible part 31 can be a rectangular film-like part.

There may be various specific structural forms of the strain detection element 33. For example, the strain detection element 33 can be columnar, sheet-shaped, block-shaped, or the like. For example, the strain detection element 33 can be sheet-shaped, which can be a metal strain gauge, a semiconductor strain gauge, a fiber optic strain gauge, or the like. The sheet-shaped strain detection elements 33 can be made by using MEMS (micro-electronics) or other technologies.

During actual use, to stably attach the flexible part 31 to the battery cell 20, optionally, the flexible part 31 is adhered to the end surface of the battery cell 20. For example, the adhering manner may be: the flexible part 31 is first adhered to double-sided tape, and then the end surface of the battery cell 20 is adhered to the other side of the double-sided tape, so that the flexible part 31 is adhered to the battery cell 20.

Referring to FIG. 5, FIG. 5 is a schematic cross-sectional structural diagram of a strain detection assembly 30 according to some embodiments of this application. According to some embodiments of this application, optionally, the flexible part 31 has an adhering layer 311 and a flexible body 312 that are arranged in a stacking manner, and the strain detection element 33 is disposed at the flexible body 312.

The adhering layer 311 is a layered adhesive that can connect surfaces of homogeneous or heterogeneous objects together.

Disposition of the adhering layer 311 facilitates stable connection of the flexible part 31 to the end surface of the battery cell 20 during actual use, preventing the flexible part 31 from falling off the battery cell 20 during use, while such falling off makes it unable to accurately obtain swelling data of the battery cell 20 during use.

The adhering layer 311, for example, is a double-sided adhesive layer. To prevent the adhering layer 311 from being damaged before use, optionally, a protective film is connected to a surface of the adhering layer 311 away from the flexible body 312. After adhering to the adhering layer 311, the protective film is only slightly adhesive, thus avoiding the adhering layer 311 from being removed when the protective film is torn off.

The strain detection element 33 can be directly disposed on an outer surface of the flexible body 312 or inside the flexible body 312. The strain detection element 33 is disposed inside the flexible body 312 in two manners: wrapping and partial embedding.

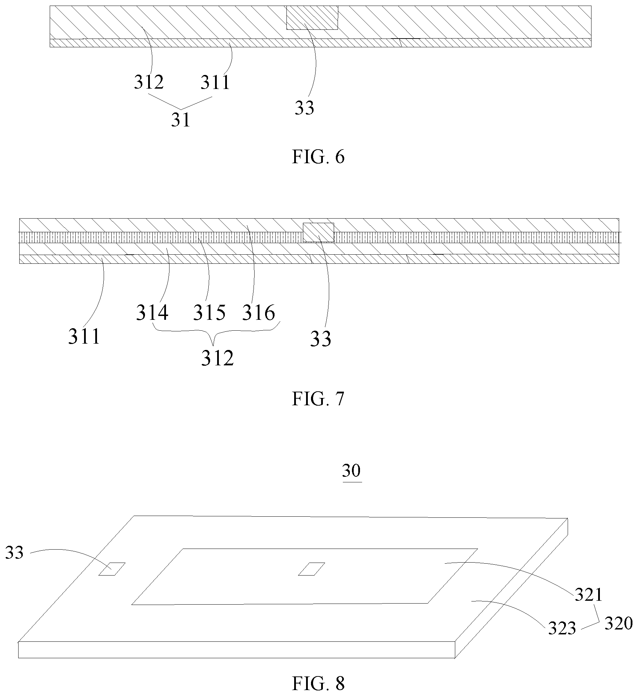

Referring to FIG. 6, FIG. 6 is a schematic cross-sectional structural diagram of a strain detection assembly 30 according to some embodiments of this application. According to some embodiments of this application, optionally, at least a portion of the strain detection element 33 is embedded in the flexible body 312.

The above disposition can stably fix the strain detection element 33 to the flexible body 312, preventing separation of the two. As compared with placing the strain detection element 33 on the surface of the flexible body 312, the manner of embedding at least a portion of the strain detection element 33 provides higher deformation detection accuracy and is more conducive to accurately obtaining swelling data of the battery cell 20 during use.

Specifically, for example, a groove is disposed in the surface of the flexible body 312, and the strain detection element 33 is disposed in the groove and has at least a part of its surface not covered by the flexible body 312. As shown in FIG. 6, the part of the surface of the strain detection element 33 not covered by the flexible body 312 is flush with the outer surface of the flexible body 312.

Referring to FIG. 5, according to some embodiments of this application, optionally, the strain detection element 33 is wrapped in the flexible body 312.

Under the above disposition conditions, the strain detection element 33 can be stably fixed to the flexible body 312, and using the flexible body 312 to protect the strain detection element 33 prevents damage to the strain detection element 33, thereby further improving the service life thereof.

A manner of wrapping the strain detection element 33 in the flexible body 312 includes but is not limited to: using a material for preparing the flexible body 312 to wrap the strain detection element 33 in one step. Another manner can be: first obtaining the flexible body 312, providing a groove in the surface of the flexible body 312 (a surface away from the adhering layer 311), embedding the strain detection element 33 in the groove, and then using a waterproof layer or the like to close an opening of the groove.

According to some embodiments of this application, optionally, the flexible body 312 is capable of controllably generating heat.

The flexible body 312 can be controlled by electricity, temperature, and the like, or even it can be configured to generate heat under a predetermined squeezing force. That the flexible body 312 is capable of controllably generating heat means that depending on actual needs, the flexible body 312 can be controlled to generate heat or not to generate heat, so as to adjust the heating temperature.

The above disposition effectively integrates the functions of heating the end surface of the battery cell 20 and detecting the swelling deformation of the end surface of the battery cell 20, offering a simple structure, thereby effectively improving space utilization. In addition, data changes detected by the strain detection element 33 are used to determine whether the strain detection assembly 30 falls off the battery cell 100 and whether there is dry burning, thereby avoiding safety accidents.

According to some embodiments of this application, optionally, the flexible body 312 is capable of electrothermally generating heat.

Electrothermally generating heat means that after power-up, electrical energy is converted into thermal energy by using the Joule effect of current, so as to heat objects.

Electrothermally generating heat has high controllability and is easy to operate. That is, when the flexible body 312 is capable of electrothermally generating heat, the strain detection assembly 30 actually functions as a heating film that also detects strain.

Referring to FIG. 7, FIG. 7 is a schematic cross-sectional structural diagram of a strain detection assembly 30 according to some embodiments of this application. According to some embodiments of this application, optionally, the flexible body 312 includes a first insulating protective layer 314, an electrothermally generating layer 315, and a second insulating protective layer 316 that are sequentially stacked, and the first insulating protective layer 314 is connected to the adhering layer 311.

The electrothermally generating layer 315 is actually a skeleton layer formed by arranging electric heating wires in a grid or serpentine pattern, with gaps in the skeleton layer (not shown in the figure).

The use of the first insulating protective layer 314 and second insulating protective layer 316 effectively protects the electrothermally generating layer 315, preventing the electrothermally generating layer 315 from being damaged. With insulation of the first insulating protective layer 314 and second insulating protective layer 316, the safety issues caused by the electrothermally generating layer 315 being directly exposed are reduced.

It can be understood that the first insulating protective layer 314 and second insulating protective layer 316 located at the gap are connected. The material of the electric heating wires includes but is not limited to iron-chromium-aluminum electric heating alloy, nickel-chromium electric heating alloy, and the like. Since the electrothermally generating layer 315 generates heat, the first insulating protective layer 314 and second insulating protective layer 316 are made of high-temperature resistant insulating materials. For example, the first insulating protective layer 314 and second insulating protective layer 316 are made of polyimide.

The strain detection element 33 can be disposed inside the first insulating protective layer 314, inside the second insulating protective layer 316, or inside the first insulating protective layer 314 and the second insulating layer. Regardless of the disposition manner, when a portion of the strain detection element 33 needs to pass through the electrothermally generating layer 315, to avoid damaging the electric heating wires, the strain detection assembly 30 is arranged at a gap of the electrothermally generating layer 315.

To monitor and obtain the temperature after the flexible body 312 electrothermally generates heat, optionally, the strain detection assembly 30 is provided with a temperature sensor (not shown in the figure). The temperature sensor is configured to monitor and obtain the temperature of the flexible body 312.

Optionally, the temperature sensor is connected to the electrothermally generating layer 315 and configured to monitor and obtain the temperature of the flexible body 312.

One or more strain detection elements 33 can be provided.

Referring to FIG. 2 and FIG. 8, FIG. 8 is a schematic structural diagram of a strain detection assembly 30 according to some embodiments of this application. According to some embodiments of this application, multiple strain detection elements 33 are provided, the multiple strain detection elements 33 include a first strain detection element and a second strain detection element, and strain detection directions of the first strain detection element and the second strain detection element are consistent.

The first strain detection element and the second strain detection element both being sheet-shaped is used as an example. They each have two planes arranged opposite along the thickness direction. In this case, the strain detection directions of the first strain detection element and second strain detection element are directions parallel to these planes respectively. Therefore, in this case, maintaining the first strain detection element and second strain detection element arranged parallel to each other can ensure that the strain detection directions of the first strain detection element and second strain detection element are consistent.

Under the above disposition, with the multiple strain detection elements 33 provided in different regions, and the strain detection directions of the first strain detection element and second strain detection element being consistent, data obtained by the strain detection elements 33 disposed at different positions can be compared. For example, data obtained by the first strain detection element and the second strain detection element can be compared to obtain actual swelling data for all regions, helping to determine, through comparative analysis, whether the flexible part 31 falls off the end surface of the battery cell 20.

Optionally, the flexible part 31 has a mounting region 320 for being attached to an end surface of at least one battery cell 20. The mounting region 320 is divided into a central region 321 and an edge region 323 surrounding the central region 321. For example, the first strain detection element is disposed in the central region 321, and the second strain detection element is disposed in the edge region 323.

The mounting region 320 refers to a region of the flexible part 31 used for being attached to the end surface of at least one battery cell 20. A region near the geometric center of the mounting region 320 is used as the central region 321, and the remaining part surrounding the central region 321 is used as the edge region 323.

Referring to FIG. 2, FIG. 9, and FIG. 10, this application provides a battery 100 including multiple battery cells 20 and the strain detection assembly 30 provided in the above embodiments, where the flexible part 31 is attached to an end surface of at least one battery cell 20.

The flexible part 31 being attached to the end surface of at least one battery cell 20 allows the flexible part 31 to deform synchronously with the swelling of the end surface of the battery cell 20 attached. Deformation of the flexible part 31 transfers strain and stress to the strain detection element 33. The strain parameter of the flexible part 31 is detected by the strain detection element 33, thereby accurately obtaining a swelling parameter of the end surface of the battery cell 20. In addition, the flexible part 31 can avoid direct contact between the strain detection element 33 and the battery cell 20, and avoid failure of the strain detection element 33 caused by heat, extending the service life and stability of the strain detection element 33, thereby helping to accurately obtain swelling data of the battery cell 20 during use over a long period.

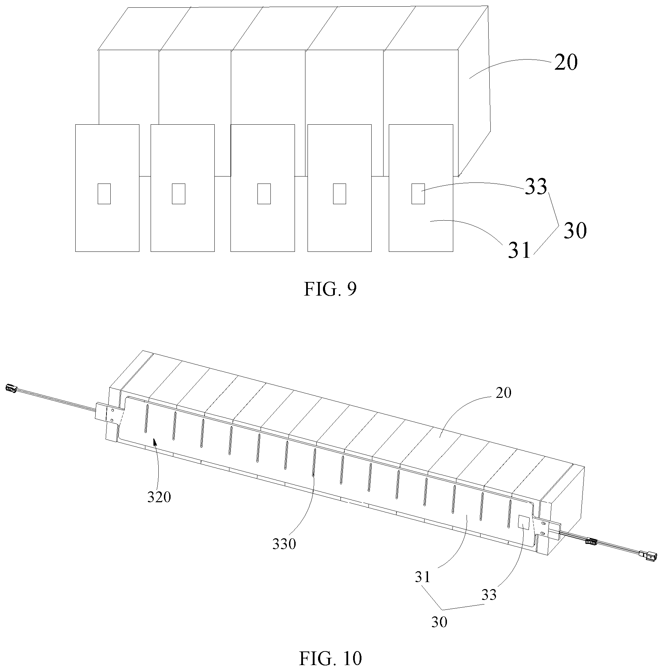

Referring to FIG. 9, in some embodiments, optionally, strain detection assemblies 30 correspond one-to-one to the battery cells 20, and a flexible part 31 of each strain detection assembly 30 is attached to an end surface of a corresponding battery cell 20.

That is, one strain detection assembly 30 detects swelling changes of an end surface of only one battery cell 20. Each strain detection assembly 30 has one or more strain detection elements 33. When multiple strain detection elements 33 are provided, strain detection directions of the multiple strain detection elements 33 are consistent.

Referring to FIG. 10, in some embodiments, optionally, the flexible part 31 of the strain detection assembly 30 is attached to end surfaces of multiple battery cells 20.

That is, one strain detection assembly 30 can simultaneously detect swelling changes of end surfaces of multiple battery cells 20. In this case, each strain detection assembly 30 has one or more strain detection elements 33. When multiple strain detection elements 33 are provided, strain detection directions of the multiple strain detection elements 33 are consistent.

As shown in FIG. 10, the strain detection assembly 30 has one strain detection element 33. To shorten the data output distance, the flexible part 31 has a mounting region 320 for being attached to end surfaces of multiple battery cells 20, and the strain detection element 33 is disposed at either end of the mounting region 320 along an arrangement direction of the multiple battery cells 20.

When the strain detection assembly 30 is integrated with a heating function, optionally, multiple swelling grooves 330 can be disposed on a surface of the flexible part 31 away from the battery cell 20. The multiple swelling grooves 330 are spaced apart along the arrangement direction of the battery cells 20. Each swelling groove 330 is correspondingly arranged at a joint of any two adjacent battery cells 20 to release stress produced when the flexible part 31 swells, avoiding breakage when the flexible part 31 swells too much.

According to some embodiments of this application, this application further provides an electric apparatus including the battery according to the foregoing embodiments, where the battery is configured to provide electrical energy.

Referring to FIG. 5 and FIG. 10, in some embodiments of this application, this application provides a strain detection assembly 30 including a flexible part 31 and a strain detection element 33. The flexible part 31 is a film-like part. The flexible part 31 is configured to be attached to end surfaces of multiple battery cells 20. The flexible part 31 has an adhering layer 311 and a flexible body 312 that are arranged in a stacking manner. The flexible body 312 is capable of controllably generating heat. The strain detection element 33 is wrapped by the flexible body 312. The flexible part 31 deforms synchronously with the swelling of the end surfaces of the battery cells 20, and deformation of the flexible part 31 transfers strain and stress to the strain detection element 33. The strain detection element 33 is configured to detect and obtain a strain parameter of the flexible part 31.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A strain detection assembly, comprising:
a flexible part; and
a strain detection element disposed at the flexible part, wherein the strain detection element is configured to detect and obtain a strain parameter of the flexible part.

2. The strain detection assembly according to claim 1, wherein the flexible part has an adhering layer and a flexible body that are arranged in a stacking manner, and the strain detection element is disposed at the flexible body.

3. The strain detection assembly according to claim 2, wherein at least a portion of the strain detection element is embedded in the flexible body.

4. The strain detection assembly according to claim 2, wherein the strain detection assembly is wrapped in the flexible body.

5. The strain detection assembly according to any one of claims 2 to 4, wherein the flexible body is capable of controllably generating heat.

6. The strain detection assembly according to claim 5, wherein the flexible body is capable of electrothermally generating heat.

7. The strain detection assembly according to claim 6, wherein the flexible body comprises a first insulating protective layer, an electrothermally generating layer, and a second insulating protective layer that are sequentially stacked, and the first insulating protective layer is connected to the adhering layer.

8. The strain detection assembly according to any one of claims 1 to 7, wherein multiple strain detection elements are provided, and the multiple strain detection elements comprise a first strain detection element and a second strain detection element, and strain detection directions of the first strain detection element and the second strain detection element are consistent.

9. A battery, comprising:
multiple battery cells; and
the strain detection assembly according to any one of claims 1 to 8, wherein the flexible part is attached to an end surface of at least one of the battery cells.

10. The battery according to claim 9, wherein strain detection assemblies correspond one-to-one to the battery cells, and the flexible part of each strain detection assembly is attached to an end surface of the corresponding battery cell.

11. The battery according to claim 9 or 10, wherein the flexible part of the strain detection assembly is attached to end surfaces of multiple battery cells.

12. An electric device, comprising the battery according to any one of claims 9 to 11 for power supply.
